(19) Europäisches Patentamt
European Patent Office
Office européen des brevets

(11) **EP 4 761 044 A1**

(12) **EUROPEAN PATENT APPLICATION**
published in accordance with Art. 153(4) EPC

(43) Date of publication:
**17.06.2026 Bulletin 2026/25**

(21) Application number: **25776984.4**

(22) Date of filing: **26.03.2025**

(51) International Patent Classification (IPC):
**H02J 7/00** (2026.01)

(52) Cooperative Patent Classification (CPC):
**H02J 7/00**

(86) International application number:
**PCT/KR2025/003836**

(87) International publication number:
**WO 2025/206728 (02.10.2025 Gazette 2025/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2024 KR 20240043627
25.03.2025 KR 20250038055**

(71) Applicant: **LG Energy Solution, Ltd.
Seoul 07335 (KR)**

(72) Inventors:
• **KIM, Hong-Kyun
Daejeon 34122 (KR)**

• **SHIN, Jong-Kwang
Daejeon 34122 (KR)**
• **KIM, Min-Hong
Daejeon 34122 (KR)**
• **RYU, Je-Chang
Daejeon 34122 (KR)**
• **SHIN, Un-Seop
Daejeon 34122 (KR)**
• **LEE, Woo-Jun
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **SYSTEM CONTROL APPARATUS AND SYSTEM CONTROL METHOD FOR BATTERY CHARGING-DISCHARGING SYSTEM**

(57)     A system control apparatus and a system control method for a battery charging/discharging system are provided. The battery charging/discharging system includes first to m-th charging/discharging groups. Each charging/discharging group includes a plurality of facility sets connected through a direct current (DC) power channel. Each facility set includes a converter and a charger/discharger. The system control apparatus includes a controller to monitor first to m-th group state information of the first to m-th charging/discharging groups. The controller controls an operation mode of the converter of each of the plurality of facility sets included in each operating charging/discharging group of the first to m-th charging/discharging groups by comparing a load factor of each of the operating charging/discharging groups with a reference load factor range, based on the first to m-th group state information. m is a natural number of 2 or greater.

FIG. 1

**Description**

TECHNICAL FIELD

The present disclosure relates to a control technology for improving the efficiency of a charging/discharging process performed by a battery charging/discharging system.

This application is based on and claims priority to Korean Patent Application No. 10-2024-0043627 filed on March 29, 2024 and Korean Patent Application No. 10-2025-0038055 filed on March 25, 2025 in the Republic of Korea, the disclosures of which are incorporated herein by reference.

BACKGROUND

Recently, there has been a rapid increase in the demand for portable electronic products such as laptop computers, video cameras and mobile phones, and with the extensive development of electric vehicles, accumulators for energy storage, robots and satellites, many studies are being made on high performance batteries that can be repeatedly charged and discharged.

Batteries on the market now include nickel-cadmium batteries, nickel-hydrogen batteries, nickel-zinc batteries, lithium batteries and the like, and among them, lithium batteries have little or no memory effect, and thus they are gaining more attention than nickel-based batteries for their advantages that recharging can be done whenever it is convenient, the self-discharge rate is very low and the energy density is high.

Batteries are manufactured as finished products through an assembly process and a charging/discharging process in a sequential order. In the assembly process, a stack of a positive electrode, a negative electrode and a separator is housed in an outer packaging together with an electrolyte, followed by sealing. In the charging/discharging process for battery formation, a predetermined charging/discharging procedure is performed on the batteries having undergone the assembly process. When the charging/discharging process is performed on the batteries, solid electrolyte interphase (SEI) is formed on the negative electrode surface, establishing the intended electrical properties.

The batteries having undergone the assembly process are transported to a battery charging/discharging system in a sequential order, and the battery charging/discharging system sequentially performs the charging/discharging process on the batteries in a first-in, first-out manner.

The battery charging/discharging system includes a plurality of charging/discharging groups, each provided to take responsibility for the charging/discharging process for each of battery trays. A large amount of power is required to operate the battery charging/discharging system, so it is important to minimize unnecessary power loss.

DISCLOSURE

Technical Problem

The present disclosure is designed to solve the above-described problems, and therefore the present disclosure is directed to providing an apparatus and method for optimizing power conversion efficiency for each converter by adaptively adjusting the number of converters to operate during operation of a battery charging/discharging system.

The present disclosure is further directed to providing an apparatus and method for individually controlling a plurality of charging/discharging groups to minimize unnecessary power loss during operation of a battery charging/discharging system.

These and other objectives and advantages of the present disclosure may be understood from the following description and will become apparent from the embodiments of the present disclosure. Also, it will be easily understood that the objectives and advantages of the present disclosure may be realized by the means set forth in the appended claims and a combination thereof.

Technical Solution

A system control apparatus according to an aspect of the present disclosure is designed for a battery charging/discharging system. The battery charging/discharging system includes first to m-th charging/discharging groups. Each charging/discharging group includes a plurality of facility sets connected through a direct current (DC) power channel. Each facility set includes a converter and a charger/discharger.

The system control apparatus includes a controller configured to monitor first to m-th group state information of the first to m-th charging/discharging groups. The controller is configured to control an operation mode of the converter of each of the plurality of facility sets included in each operating charging/discharging group of the first to m-th charging/discharging groups by comparing a load factor of each of the operating charging/discharging groups with a reference load factor range, based on the first to m-th group state information. m is a natural number of 2 or greater.

When a load factor of an i-th charging/discharging group of the first to m-th charging/discharging groups is above an upper limit of the reference load factor range during operation of the i-th charging/discharging group in a charge dominant state, the controller may be configured to switch any one converter of the i-th charging/discharging group from an idle mode to a power supply mode. i is a natural number that is equal to or smaller than m.

When the load factor of the i-th charging/discharging group is above the upper limit of the reference load factor range during the operation of the i-th charging/discharging group in the charge dominant state, the controller may be configured to determine priority rank of two or more converters in the idle mode among a plurality of chargers/dischargers of the i-th charging/discharging group, and switch any one converter having highest priority rank among the two or more converters in the idle mode to the power supply mode.

When a load factor of an i-th charging/discharging group of the first to m-th charging/discharging groups is below a lower limit of the reference load factor range during operation of the i-th charging/discharging group in a charge dominant state, the controller may be configured to switch any one converter of the i-th charging/discharging group from a power supply mode to an idle mode. i is a natural number that is equal to or smaller than m.

When the load factor of the i-th charging/discharging group is below the lower limit of the reference load factor range during the operation of the i-th charging/discharging group in the charge dominant state, the controller may be configured to determine priority rank of two or more converters in the power supply mode among a plurality of chargers/dischargers of the i-th charging/discharging group, and switch any one converter having highest priority rank among the two or more converters in the power supply mode to the idle mode.

When a load factor of an i-th charging/discharging group of the first to m-th charging/discharging groups is above an upper limit of the reference load factor range during operation of the i-th charging/discharging group in a discharge dominant state, the controller may be configured to switch any one converter of the i-th charging/discharging group from an idle mode to a power regeneration mode. i is a natural number that is equal to or smaller than m.

When the load factor of the i-th charging/discharging group is above the upper limit of the reference load factor range during the operation of the i-th charging/discharging group in the discharge dominant state, the controller may be configured to determine priority rank of two or more converters in the idle mode among a plurality of chargers/dischargers of the i-th charging/discharging group, and switch any one converter having highest priority rank among the two or more converters in the idle mode to the power regeneration mode.

When a load factor of an i-th charging/discharging group of the first to m-th charging/discharging groups is below a lower limit of the reference load factor range during operation of the i-th charging/discharging group in a discharge dominant state, the controller may be configured to switch any one converter of the i-th charging/discharging group from a power regeneration mode to an idle mode. i is a natural number that is equal to or smaller than m.

When the load factor of the i-th charging/discharging group is below the lower limit of the reference load factor range during the operation of the i-th charging/discharging group in the discharge dominant state, the controller may be configured to determine priority rank of two or more converters in the power regeneration mode among a plurality of chargers/dischargers of the i-th charging/discharging group, and switch any one converter having highest priority rank among the two or more converters in the power regeneration mode to the idle mode.

When two or more charging/discharging groups of the first to m-th charging/discharging groups are available for battery allocation, the controller may be configured to select any one charging/discharging group having a maximum discharge dominant state among the two or more charging/discharging groups available for battery allocation. The controller may be configured to set any one charger/discharger having no battery allocated thereto among the plurality of chargers/dischargers of the selected charging/discharging group as a top priority battery allocation target.

When at least two chargers/dischargers of the charging/discharging group having the maximum discharge dominant state have no battery allocated thereto, the controller may be configured to set any one charger/discharger closest to a predetermined battery entry point among the two or more chargers/dischargers having no battery allocated thereto as the top priority battery allocation target.

When a first number of adjacent chargers/dischargers of a plurality of chargers/dischargers of an i-th charging/discharging group of the first to m-th charging/discharging groups are in a battery charging mode, the controller may be configured to prohibit the battery charging mode for each of remaining chargers/dischargers of the i-th charging/discharging group.

When a second number of adjacent chargers/dischargers of the plurality of chargers/dischargers of the i-th charging/discharging group are in a battery discharging mode, the controller may be configured to prohibit the battery discharging mode for each of remaining chargers/dischargers of the i-th charging/discharging group.

A system control method according to another aspect of the present disclosure is designed for the above-described battery charging/discharging system. The system control method includes monitoring first to m-th group state information of the first to m-th charging/discharging groups, and controlling an operation mode of the converter of each of the plurality of facility sets included in each operating charging/discharging group of the first to m-th charging/discharging groups by comparing a load factor of each of the operating charging/discharging groups with a reference load factor range, based on the first to m-th group state information.

The controlling of the operation mode of the converter of each of the plurality of facility sets included in each operating charging/discharging group may include switching any one converter of an i-th charging/discharging group of the first to m-th charging/discharging groups from an idle mode to a power supply mode when the load factor of the i-th charging/discharging group is above an upper limit of the reference load factor range during operation of the i-th charging/discharging group in a charge dominant state. i is a natural number that is equal to or smaller than m.

The controlling of the operation mode of the converter of each of the plurality of facility sets included in each operating charging/discharging group may include switching any one converter of an i-th charging/-discharging group of the first to m-th charging/discharging groups from a power supply mode to an idle mode when the load factor of the i-th charging/discharging group is below a lower limit of the reference load factor range during operation of the i-th charging/discharging group in a charge dominant state. i is a natural number that is equal to or smaller than m.

Advantageous Effects

According to at least one of the embodiments of the present disclosure, during operation of the battery charging/discharging system, power conversion efficiency of each converter may be optimized by adaptively adjusting the number of converters to operate in power supply mode or power regeneration mode for each charging/discharging group according to the load factor of each charging/discharging group.

Furthermore, according to at least one of the embodiments of the present disclosure, during operation of the battery charging/discharging system, unnecessary power loss may be minimized by individually controlling a plurality of charging/discharging groups to allow at least one converter and at least one charger/discharger to exchange power through a shortest possible power path. Additionally, it may be possible to reduce heat generation caused by line loss, thereby improving operational reliability.

In addition, according to at least one of the embodiments of the present disclosure, a top priority battery allocation target may be selected from among a plurality of chargers/dischargers of a charging/discharging group having the most highly discharge dominant state, thereby alleviating the discharge dominant state of the corresponding charging/discharging group.

The effects of the embodiments of the present disclosure are not limited to the aforementioned effects, and these and other effects will be clearly understood by those skilled in the art from the appended claims.

BRIEF DESCRIPTION OF THE DRAWINGS

The accompanying drawings illustrate exemplary embodiments of the present disclosure and together with the following detailed description, serve to provide a better understanding of the technical aspects of the present disclosure, and thus the present disclosure should not be construed as being limited to the drawings.

FIGS. 1 to 3 are diagrams referenced in describing the overall architecture of a battery charging/discharging system 10 according to an embodiment of the present disclosure.

FIG. 4 is a diagram schematically showing an exemplary arrangement relationship of charging/-discharging groups of the battery charging/discharging system 10 shown in FIG. 1.

FIG. 5 is a flowchart schematically illustrating a system control method according to another embodiment of the present disclosure.

FIG. 6 is a flowchart schematically illustrating an example of subroutines that may be included in step S520 of FIG. 5.

FIG. 7 is a flowchart schematically illustrating an example of subroutines that may be included in step S630 of FIG. 6.

FIG. 8 is a flowchart schematically illustrating another example of subroutines that may be included in step S520 of FIG. 5.

FIG. 9 is a flowchart schematically illustrating an example of subroutines that may be included in step S830 of FIG. 8.

FIG. 10 is a flowchart schematically illustrating another example of subroutines that may be included in step S520 of FIG. 5.

FIG. 11 is a flowchart schematically illustrating an example of subroutines that may be included in step S1030 of FIG. 10.

FIG. 12 is a flowchart schematically illustrating another example of subroutines that may be included in step S520 of FIG. 5.

FIG. 13 is a flowchart schematically illustrating an example of subroutines that may be included in step S1230 of FIG. 12.

FIG. 14 is a flowchart schematically illustrating a system control method according to another embodiment of the present disclosure.

FIG. 15 is a diagram referenced in describing circuit layout and function of a main smoothing circuit and a sub smoothing circuit shown in FIG. 1.

BEST MODE

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

Therefore, the embodiments described herein and the illustrations shown in the drawings are exemplary embodiments of the present disclosure to describe the technical aspects of the present disclosure but not intended to be limiting, so it should be understood that a variety of other equivalents and modifications could be made thereto at the time the application was filed.

The terms including the ordinal numbers such as "first", "second" and the like, are used to distinguish one element from another among various elements, and are not intended to limit the elements by the terms.

Unless the context clearly indicates otherwise, the terms "comprise" and "include" when used in this specification, specify the presence of the stated elements, but do not preclude the presence or addition of one or more other elements. Additionally, the term "unit" as used herein refers to a processing unit of at least one function or operation, and may be implemented by hardware and software either alone or in combination.

In addition, throughout this specification, it will be further understood that when an element is referred to as being "connected to" another element, it can be directly connected to the other element or intervening elements may be present.

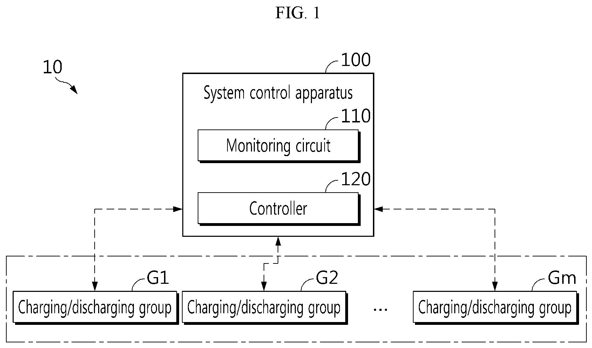

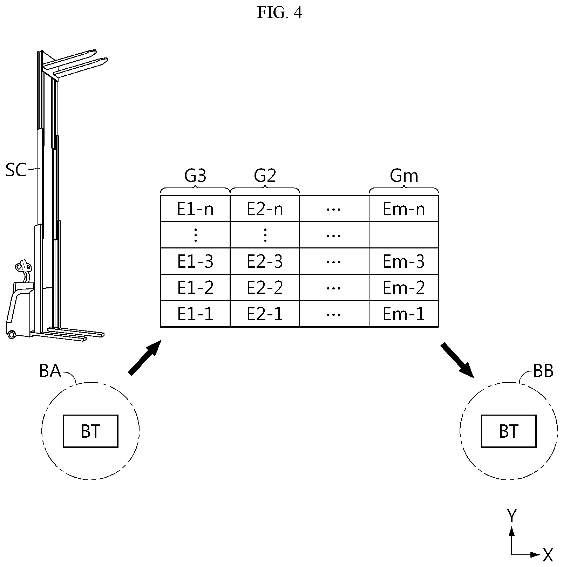

FIGS. 1 to 3 are diagrams referenced in describing the overall architecture of a battery charging/discharging system 10 according to an embodiment of the present disclosure, and FIG. 4 is a diagram schematically showing an exemplary arrangement relationship of charging/discharging groups of the battery charging/discharging system 10 shown in FIG. 1.

Referring to FIGS. 1 to 4, the battery charging/discharging system 10 includes first to m-th charging/discharging groups G1~Gm and a system control apparatus 100. m is a natural number of 2 or greater. The battery charging/discharging system 10 may further include a stacker crane SC.

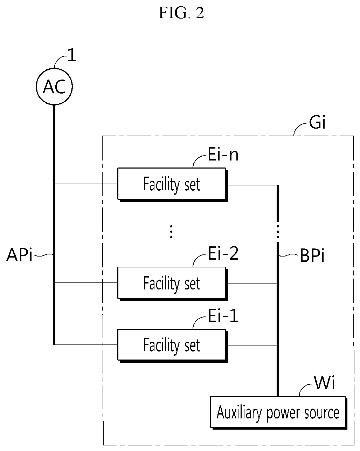

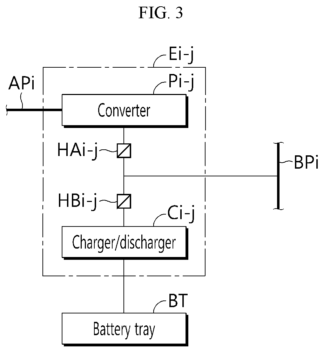

When i is a natural number that is equal to or smaller than m, a charging/discharging group Gi includes first to n-th facility sets Ei-1~Ei-n. m is a natural number of 2 or greater. The facility sets Ei-1~Ei-n may be electrically coupled through a direct current (DC) power channel BPi to enable bidirectional power supply. The charging/discharging group Gi may further include an auxiliary power source Wi electrically coupled to the facility sets Ei-1~Ei-n through the DC power channel BPi. The auxiliary power source Wi is not limited to a particular type and may include any type of device having a storage function and a supply function of electrical energy such as a battery bank or an Energy Storage System (ESS). Although FIGS. 2 and 3 shows the DC power channel BPi of a single line, the DC power channel BPi may include a pair of (+) line and (-) line. Additionally, in the present disclosure, each line may include any one of a busbar and an electric cable or a combination thereof.

When j is a natural number that is equal to or smaller than n, a facility set Ei-j of the charging/discharging group Gi includes a converter Pi-j and a charger/discharger Ci-j. The pair of lines of the DC power channel BPi may be directly or indirectly coupled to a pair of DC input/output terminals of the converter Pi-j and a pair of DC input/output terminals of the charger/discharger Ci-j. The converter Pi-j may have alternating current (AC) input/output terminals for connection to an AC power network 1. The charger/discharger Ci-j may further have a pair of DC input/output terminals for connection to a pair of DC input/output terminals of a battery tray BT.

The facility set Ei-j may further include at least one of a main smoothing circuit HAi-j or a sub smoothing circuit HBi-j.

Although FIG. 3 shows the facility set Ei-j including the single charger/discharger Ci-j, the facility set Ei-j may further include at least one additional charger/discharger electrically connected in parallel to the charger/discharger Ci-j through the DC power channel BPi.

The converter Pi-j is electrically coupled to the AC power network 1 through an AC power channel APi. During operation in a power supply mode, the converter Pi-j converts AC power supplied from the AC power network 1 to DC power and supplies it to the DC power channel BPi. During operation in a power regeneration mode, the converter Pi-j converts DC power supplied through the DC power channel BPi to AC power and supplies it to the AC power network 1. The converter Pi-j may be also referred to as 'power conversion facility'.

The voltage of the DC power supplied from the converter Pi-j to the DC power channel BPi may be maintained at a reference voltage (for example, preset to 370 V) by feedback control.

The converter Pi-j includes an AC-DC converter. The system control apparatus 100 may perform ON/OFF control for the AC-DC converter or adjust the magnitude of the DC power supplied from the converter Pi-j to the DC power channel BPi according to the condition of the AC power network 1.

The charger/discharger Ci-j may include at least one bidirectional DC-DC converter. The charger/discharger Ci-j may relay the bidirectional power transfer between the battery tray BT transported to the charger/discharger Ci-j and the DC power channel BPi.

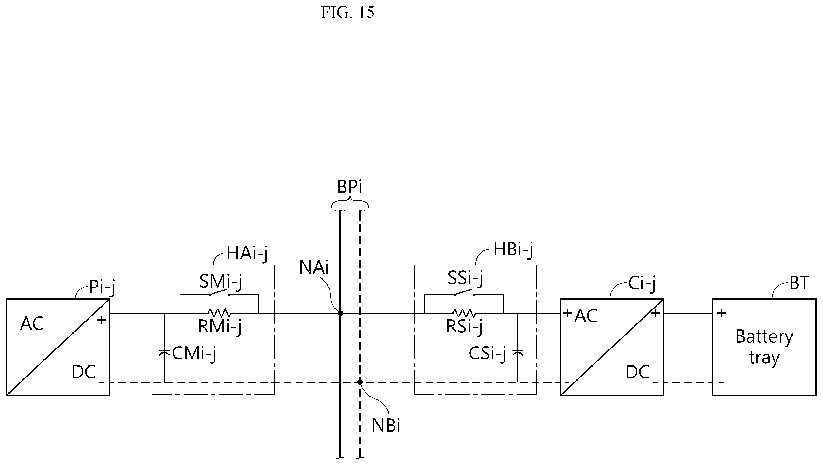

Referring to FIG. 15, during operation in a battery charging mode, the charger/discharger Ci-j may convert DC power supplied through the pair of DC power terminals connected to the converter Pi-j side to charge power having a predetermined voltage level, and output it to the pair of DC power terminals connected to the battery tray BT side. During operation in a battery discharging mode, the charger/discharger Ci-j may convert discharge power of the battery tray BT supplied through the pair of DC power terminals connected to the battery tray BT side to DC power having a predetermined voltage level, and output it to the pair of DC power terminals connected to the converter Pi-j side.

The battery charging/discharging system 10 includes m charging/discharging groups G1~Gm, each charging/discharging group includes n facility sets, and each facility set includes q (q is a natural number of 1 or greater) chargers/dischargers. A charging/discharging process may be individually performed on a maximum of m×n×q battery trays BT at the same time by the charging/discharging groups G1~Gm.

The charging/discharging process includes at least one charging stage and at least one discharging stage in an alternating manner. When the charging/discharging process starts, the charging stage is performed first, and subsequently, the discharging stage is performed. Each charging stage may include at least one of a constant current charging procedure, a constant power charging procedure or a constant voltage charging procedure. Each discharging stage may include at least one of a constant current discharging procedure, a constant power discharging procedure or a constant voltage discharging procedure.

Each battery tray BT undergoes an assembly process, then is transported to the battery charging/discharging system 10 in a sequential order, and goes through the charging/discharging process by any one charger/discharger of the battery charging/discharging system 10 in a first-in, first-out manner.

Additionally, the charger/discharger included in a facility set may operate in the battery charging mode, the battery discharging mode and an idle mode, independently of the charger/discharger included in another facility set.

The system control apparatus 100 includes a monitoring circuit 110 and a controller 120.

The monitoring circuit 110 may individually monitor the condition of the converter Pi-j and the condition of the charger/discharger Ci-j.

The monitoring circuit 110 may acquire measurement data of voltage and current of the DC input/output power of the converter Pi-j. The monitoring circuit 110 may acquire measurement data of voltage and current of the DC input/output power of the charger/discharger Ci-j.

The controller 120 may include, in hardware, at least one of application specific integrated circuits (ASICs), digital signal processors (DSPs), digital signal processing devices (DSPDs), programmable logic devices (PLDs), field programmable gate arrays (FPGAs), microprocessors or electrical units for performing other functions.

The controller 120 may have memory therein. The memory may include at least one type of storage medium of flash memory type, hard disk type, Solid State Disk (SSD) type, Silicon Disk Drive (SDD) type, multimedia card micro type, random access memory (RAM), static random access memory (SRAM), read-only memory (ROM), electrically erasable programmable read-only memory (EEPROM) or programmable read-only memory (PROM). The memory may store data and programs required for the operation by the controller 120. The memory may store data indicating the results of the operation by the controller 120.

The memory may record predetermined battery allocation rule(s). The purpose of the battery allocation rule may be to determine which of at least two chargers/dischargers having no battery allocated thereto needs battery allocation with highest priority when the two or more chargers/dischargers of the m×n×q chargers/dischargers have no battery allocated thereto.

The memory may pre-store a path length from each converter of the i-th charging/discharging group Gi to each charger/discharger of the i-th charging/discharging group Gi. When x and y are different natural numbers that are equal to or smaller than n, a path length of a converter Pi-x with respect to a charger/discharger Ci-x may be shorter than a path length of the converter Pi-x with respect to a charger/discharger Ci-y.

The controller 120 may monitor first to m-th group state information respectively corresponding to the first to m-th charging/discharging groups G1~Gm based on the measurement data acquired by the monitoring circuit 110.

The controller 120 may individually control an operation mode of each of the converters Pi-1~Pi-n of the facility sets Ei-1~Ei-n included in the i-th charging/discharging group Gi based on the first to m-th group state information, to bring a load factor of the i-th charging/discharging group Gi to within a reference load factor range.

In the present disclosure, a charge dominant state of the battery group Gi may represent that the magnitude of the total charge power (referred to as 'power consumption') of the battery group Gi is equal to or larger than the magnitude of the total discharge power (referred to as 'power regeneration'), and a discharge dominant state of the battery group Gi may represent that the magnitude of the total discharge power of the battery group Gi is larger than the magnitude of the total charge power.

The total charge power of the battery group Gi may indicate the sum of power supplied to charger(s)/discharger(s) operating in the charging mode among the plurality of chargers/dischargers Ci-1~Ci-n of the battery group Gi.

The total discharge power of the battery group Gi may indicate the sum of power regenerated from charger(s)/discharger(s) operating in the discharging mode among the plurality of chargers/dischargers Ci-1~Ci-n of the battery group Gi.

Referring to FIG. 4, an exemplary arrangement of the total of m×n facility sets is shown. The X axis may indicate a direction corresponding to the ground, and the Y axis may indicate a direction perpendicular to the ground. FIG. 4 shows that each of the charging/discharging groups G1~Gm is arranged to form a column, and facility sets in the same charging/discharging group are stacked vertically. The total of m×n facility sets may be placed in a different arrangement from that of FIG. 4.

When at least one charger/discharger of each of at least two charging/discharging groups of the charging/discharging groups G1~Gm has no battery allocated thereto, the controller 120 may set any one charger/discharger having no battery allocated thereto as a top priority battery allocation target according to a first battery allocation rule. The first battery allocation rule may be preset to select any one charger/discharger of any one charging/discharging group having the maximum discharge dominant state among the at least two charging/discharging groups. As an example, when all the charging/discharging groups G1~Gm operate in the charge dominant state, any one of the charging/discharging groups G1~Gm in which the total charge/discharge power (or its absolute value) corresponding to a difference between the total charge power and the total discharge power is the smallest in magnitude may be regarded as the charging/discharging group having the maximum discharge dominant state. As another example, when at least two of the charging/discharging groups G1~Gm operate in the discharge dominant state, any one charging/discharging group in which the total charge/discharge power is the largest in magnitude among the two or more charging/discharging groups in the discharge dominant state may be regarded as the charging/discharging group having the maximum discharge dominant state.

As the discharge dominant state is severer, the likelihood of power regeneration may increase, and as the likelihood of power regeneration is higher, DC-AC power conversion loss may increase. The controller 120 may assign a highest rank in battery allocation to a specific charger/discharger of a charging/discharging group in the most highly discharge dominant state. Accordingly, the highest ranked charger/discharger may start the charging/discharging process earlier than the other charger/discharger in the idle mode, and the extent of discharge dominant state of the charging/discharging group to which the corresponding charger/discharger belongs may be reduced.

When at least two of the chargers/dischargers C1-1~Cm-n of the charging/discharging groups G1~Gm have no battery allocated thereto, the controller 120 may set any one of the two or more chargers/dischargers having no battery allocated thereto as a top priority battery allocation target according to a second battery allocation rule. The second battery allocation rule may be preset to select one charger/discharger nearest a predetermined battery entry point BA. The battery entry point BA may be a location to which the battery tray BT accommodating battery cells having undergone the assembly process is transported.

The second battery allocation rule may be applied when selecting any one charger/discharger in any one charging/discharging group selected by the first battery allocation rule. As an example, when two chargers/dischargers Em-2, Em-3 of the charging/discharging group Gm selected according to the first battery allocation rule have no battery allocated thereto, the charger/discharger Em-2 located closer to the battery entry point BA than the charger/discharger Em-3 among the two chargers/dischargers Em-2, Em-3 may be set as the top priority battery allocation target according to the second battery allocation rule. In this case, the stacker crane SC may pick up the battery tray BT located at the battery entry point BA and insert it into the charger/discharger Em-2. Accordingly, the pair of DC power terminals of the battery tray BT are connected to the pair of DC power terminals of the charger/discharger Em-2.

When any charger/discharger of the battery charging/discharging system 10 completes the charging/discharging process for the battery tray BT provided to the charger/discharger, the stacker crane SC may pick up the battery tray BT that has completed the charging/discharging process from the charger/discharger accommodating the battery tray BT, and transport it to a predetermined battery exit point BB.

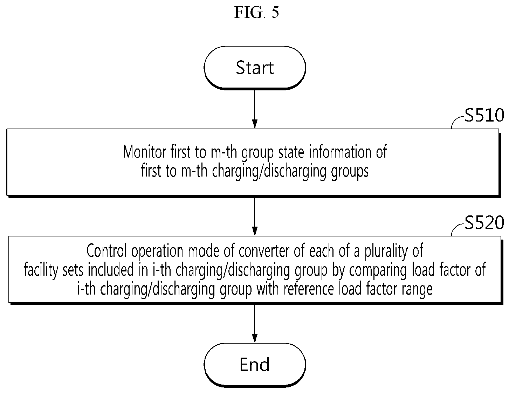

FIG. 5 is a flowchart schematically illustrating a system control method according to another embodiment of the present disclosure. The method according to FIG. 5 may be periodically or aperiodically performed by the system control apparatus 100 in a repeated manner while the charging/discharging process is performed by the battery charging/discharging system 10.

Referring to FIGS. 1 to 5, in step S510, the controller 120 monitors the first to m-th group state information respectively corresponding to the first to m-th charging/discharging groups G1~Gm based on the data collected through the monitoring circuit 110.

The i-th group state information may indicate the total charge power, the total discharge power and the load factor of the charging/discharging group Gi, the voltage of the DC power channel BPi, the power of the DC power channel BPi, the operation mode of at least one of the converters Pi-1~Pi-n, the input/output power of at least one of the converters Pi-1~Pi-n, the presence or absence of battery allocation to at least one of the chargers/dischargers Ci-1~Ci-n, the operation mode of at least one of the chargers/dischargers Ci-1~Ci-n, or the input/output power of at least one of the chargers/dischargers Ci-1~Ci-n. For reference, the power of the DC power channel BPi may indicate a difference between the total charge power and the total discharge power of the charging/discharging group Gi.

In step S520, the controller 120 individually controls the operation mode of the converter of each of the plurality of facility sets Ei-1~Ei-n included in each operating charging/discharging group (for example, Gi) of the first to m-th charging/discharging groups G1~Gm based on the first to m-th group state information, to bring the load factor of each operating charging/discharging group (for example, Gi) to within the reference load factor range. The operating charging/discharging group may represent that at least one converter of the charging/-discharging group is in the power supply mode or power regeneration mode.

The reference load factor range may refer to a load factor range of the converter in which the power conversion efficiency of the converter is equal to or larger than a predetermined optimum efficiency (for example, 50%).

The load factor of the converter may be a ratio of the input/output power of the converter to the rated power of the converter. When the load factor of the converter is overly low or high, the power conversion efficiency of the converter may be low. For example, in the case where the rated power of the converter is 10 kW, when the input/output power of the converter is +3 kW, the load factor of the converter may be 30%, and when the input/output power of the converter is -5 kW, the load factor of the converter may be 50%. The lower limit (for example, 35%) and the upper limit (for example, 70%) of the reference load factor range may be referred to as a first reference load factor and a second reference load factor, respectively.

In the charge dominant state, the load factor of the i-th charging/discharging group Gi may be determined to be equal to a supply load factor, and in the discharge dominant state, the load factor of the i-th charging/discharging group Gi may be determined to be equal to a regeneration load factor. The supply load factor may be a ratio of the total charge power of the i-th charging/discharging group Gi to the total rated power corresponding to the number of converter(s) operating in the power supply mode among the plurality of converters Pi-1~Pi-n. The regeneration load factor may be a ratio of the total discharge power (absolute value) of the i-th charging/discharging group Gi to the total rated power corresponding to the number of converter(s) operating in the power regeneration mode among the plurality of converters Pi-1~Pi-n.

Alternatively, the load factor of the i-th charging/discharging group Gi may be a value acquired by dividing the total charge/discharge power of the i-th charging/discharging group Gi by the number of converter(s) operating in the power supply mode or power regeneration mode among the plurality of converters Pi-1~Pi-n. For example, when the rated power of the converter is 10 kW, the total charge/discharge power of the i-th charging/discharging group Gi is +50 kW, eight converters (for example, Pi-1~Pi-8) of the i-th charging/-discharging group Gi operate in the power supply mode and two converters (for example, Pi-11 and Pi-12) of the i-th charging/discharging group Gi operate in the power regeneration mode, the load factor of the i-th charging/-discharging group Gi is 50 kW/{10 kW*(8+2)} * 100% = 50%. For reference, in this specification, a positive sign is affixed to the total charge/discharge power of the charging/discharging group in the charge dominant state, and a negative sign is affixed to the total charge/discharge power of the charging/discharging group in the discharge dominant state. Likewise, a positive sign is affixed to the charge power, and a negative sign is affixed to the discharge power.

Alternatively, the load factor of the i-th charging/discharging group Gi may be any one load factor having a larger difference from the reference load factor range among the supply load factor and the regeneration load factor.

As an example, assume that the rated power of the converter is 10 kW, the total charge power of the i-th charging/discharging group Gi is +60 kW, the total discharge power of the i-th charging/discharging group Gi is -10 kW, eight converters (for example, Pi-1~Pi-8) of the i-th charging/discharging group Gi operate in the power supply mode, and two converters (for example, Pi-11~Pi-12) of the i-th charging/discharging group Gi operate in the power regeneration mode. In this instance, the supply load factor 60 kW/(10 kW*8)*100% = 75% is larger than the second reference load factor of 70%, whereas the regeneration load factor 10 kW/(10 kW*2) * 100% is within the reference load factor range between 35% and 70%, so the load factor of the i-th charging/-discharging group Gi may be determined to be 75% that is equal to the supply load factor.

As another example, assume that the rated power of the converter is 10 kW, the total charge power of the i-th charging/discharging group Gi is +60 kW, the total discharge power of the i-th charging/discharging group Gi is -16 kW, eight converters (for example, Pi-1~Pi-8) of the i-th charging/discharging group Gi operate in the power supply mode, and two converters (for example, Pi-11~Pi-12) of the i-th charging/discharging group Gi operate in the power regeneration mode. In this instance, the regeneration load factor 16 kW/(10 kW*2) *100% = 80% has a larger difference from the second reference load factor of 70% than the supply load factor 60 kW/(10 kW*8)*100% = 75%, so the load factor of the i-th charging/discharging group Gi may be determined to be 80% that is equal to the regeneration load factor.

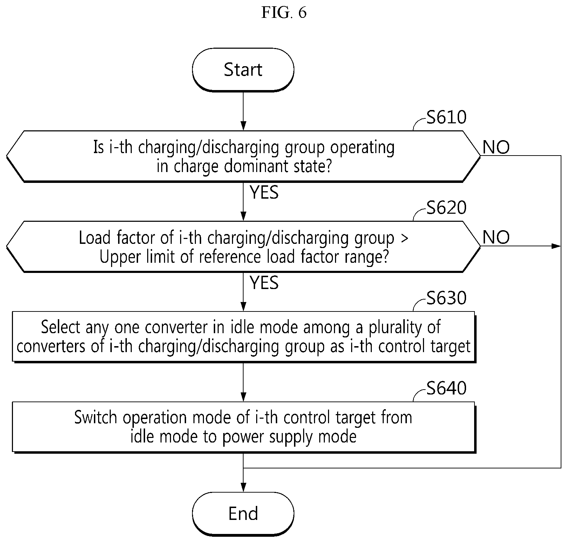

FIG. 6 is a flowchart schematically illustrating an example of subroutines that may be included in the step S520 of FIG. 5. The method of FIG. 6 may be individually performed on the first to m-th charging/discharging groups G1~Gm.

Referring to FIG. 6, in step S610, the controller 120 determines whether the i-th charging/discharging group Gi is operating in the charge dominant state. When a value of the step S610 is "YES", step S620 may be performed.

In the step S620, the controller 120 determines whether the load factor of the i-th charging/discharging group Gi is above the upper limit (the second reference load factor) of the reference load factor range. When a value of the step S620 is "YES", step S630 may be performed.

In the step S630, the controller 120 selects any one converter in the idle mode among the plurality of converters Pi-1~Pi-n of the i-th charging/discharging group Gi as an i-th control target.

In step S640, the controller 120 switches the operation mode of the i-th control target from the idle mode to the power supply mode.

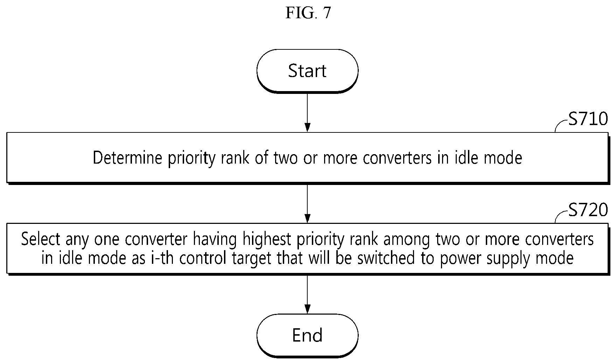

FIG. 7 is a flowchart schematically illustrating an example of subroutines that may be included in the step S630 of FIG. 6. The method of FIG. 7 may be performed on the condition that at least one charger/discharger of the plurality of chargers/dischargers Ci-1~Ci-n of the i-th charging/discharging group Gi is in the battery charging mode, and two or more converters of the plurality of converters Pi-1~Pi-n of the i-th charging/discharging group Gi are in the idle mode.

Referring to FIG. 7, in step S710, the controller 120 determines priority rank of the two or more converters in the idle mode.

The priority rank of each converter may be determined based on at least one of the total path length or the mode duration of the converter. The mode duration of the converter in the idle mode may be a length of time from when the converter entered the idle mode for the last time to when the step S710 was performed.

The total path length of each converter in the idle mode may be related to the charger(s)/discharger(s) in the battery charging mode within the i-th charging/-discharging group Gi. When it is assumed that the converter Pi-j is in the idle mode, the total path length of the converter Pi-j may be the sum of path lengths from the converter Pi-j to each charger/discharger in the battery charging mode. For example, assume that the converter P1-2 is in the idle mode and three chargers/dischargers C1-3~C1-5 are in the battery charging mode. In this instance, the total path length of the converter P1-2 may be determined to be equal to the sum of the path length from the converter P1-2 to the charger/discharger C1-3, the path length from the converter P1-2 to the charger/discharger C1-4 and the path length from the converter P1-2 to the charger/discharger C1-5.

Of the two or more converters in the idle mode, higher priority rank may be set to one converter having the total path length that is shorter than the other.

Alternatively, of the two or more converters in the idle mode, higher priority rank may be set to one converter having longer mode duration than the other.

Alternatively, of the two or more converters in the idle mode, higher priority rank may be set to one converter having smaller or larger ranking score than the other, wherein the ranking score is based on both the total path length and the mode duration. Equations 1 and 2 below are exemplary mathematical operations used to calculate the ranking score of each converter.

<Equation 1>

$$A_{i-j} = \left(T_{i-j} \times W_2\right) - \left(L_{i-j} \times W_1\right)$$

<Equation 2>

$$A_{i-j} = \frac{\left(L_{i-j} \times W_1\right)}{\left(T_{i-j} \times W_2\right)}$$

In Equations 1 and 2, $A_{i-j}$ denotes the ranking score of the converter Pi-j, $L_{i-j}$ denotes the total path length of the converter Pi-j, $T_{i-j}$ denotes the mode duration of the converter Pi-j, $W_1$ denotes a predetermined first coefficient (which may be a positive number), and $W_2$ denotes a predetermined second coefficient (which may be a positive number).

According to Equation 1, as $T_{i-j}$ is larger and $L_{i-j}$ is shorter, $A_{i-j}$ increases. Accordingly, when Equation 1 is used, higher priority rank may be assigned to larger ranking score.

According to Equation 2, as $T_{i-j}$ is larger and $L_{i-j}$ is shorter, $A_{i-j}$ decreases. Accordingly, when Equation 2 is used, higher priority rank may be assigned to smaller ranking score.

In step S720, the controller 120 selects any one converter having the highest priority rank among the two or more converters in the idle mode as the i-th control target that will be switched to the power supply mode.

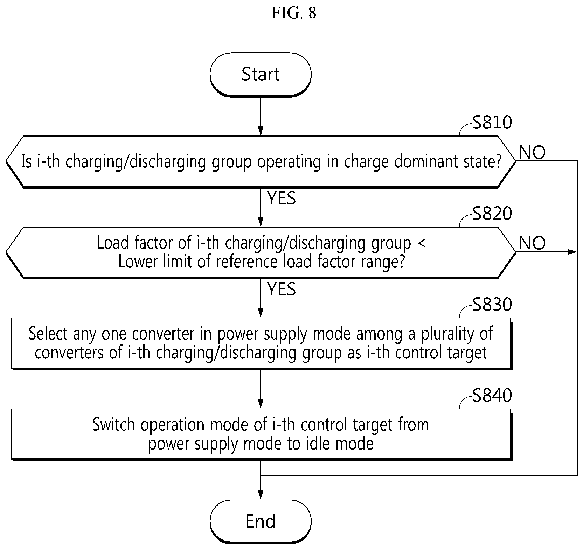

The i-th control target selected in the step S720 operates in the power supply mode when the step S640 is performed. Accordingly, there are provided three technical effects as follows: the first technical effect of bringing the load factor of the i-th charging/discharging group Gi to within the reference load factor range or closer to the second reference load factor; the second technical effect of minimizing an increase in line loss during power supply to the two or more chargers/dischargers in the battery charging mode of the i-th charging/discharging group Gi; and the third technical effect of suppressing an imbalance of the operation time in the idle mode between the plurality of converters of the i-th charging/discharging group Gi. FIG. 8 is a flowchart schematically illustrating another example of subroutines that may be included in the step S520 of FIG. 5. The method of FIG. 8 may be individually performed on the first to m-th charging/discharging groups G1~Gm.

Referring to FIG. 8, in step S810, the controller 120 determines whether the i-th charging/discharging group Gi is operating in the charge dominant state. When a value of the step S810 is "YES", step S820 may be performed.

In the step S820, the controller 120 determines whether the load factor of the i-th charging/discharging group Gi is below the lower limit (the first reference load factor) of the reference load factor range. When a value of the step S820 is "YES", step S830 may be performed.

In the step S830, the controller 120 selects any one converter in the power supply mode among the plurality of converters Pi-1~P-n of the i-th charging/-discharging group Gi as the i-th control target.

In step S840, the controller 120 switches the operation mode of the i-th control target from the power supply mode to the idle mode.

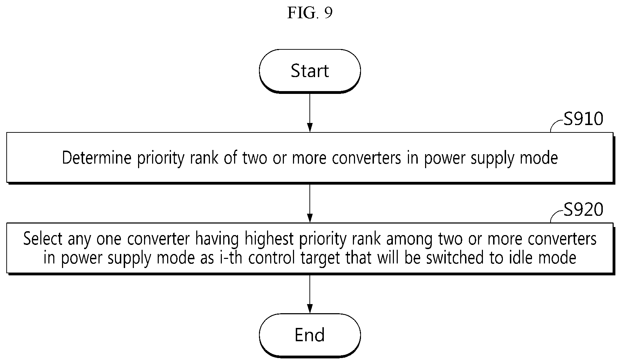

FIG. 9 is a flowchart schematically illustrating an example of subroutines that may be included in the step S830 of FIG. 8. The method of FIG. 9 may be performed on the condition that at least one charger/discharger of the plurality of chargers/dischargers Ci-1~Ci-n of the i-th charging/discharging group Gi is in the battery charging mode, and two or more converters of the plurality of converters Pi-1~Pi-n of the i-th charging/discharging group Gi are in the power supply mode.

Referring to FIG. 9, in step S910, the controller 120 determines priority rank of the two or more converters in the power supply mode.

The priority rank of each converter may be determined based on at least one of the total path length or the mode duration of the converter. The mode duration of the converter in the power supply mode be a length of time from when the converter entered the power supply mode for the last time to when the step S910 was performed.

The total path length of each converter in the power supply mode may be related to the charger(s)/-discharger(s) in the battery charging mode within the i-th charging/discharging group Gi. When it is assumed that the converter Pi-j is in the power supply mode, the total path length of the converter Pi-j may be the sum of path lengths from the converter Pi-j to each charger/discharger in the battery charging mode. The method for determining the total path length has already been described with reference to FIG. 7, and repeated description is omitted.

Of the two or more converters in the power supply mode, higher priority rank may be set to one converter having the total path length that is longer than the other.

Alternatively, of the two or more converters in the power supply mode, higher priority rank may be set to one converter having the mode duration that is longer than the other.

Alternatively, of the two or more converters in the power supply mode, higher priority rank may be set to one converter having smaller or larger ranking score than the other, wherein the ranking score is based on both the total path length and the mode duration. Equations 3 and 4 below are exemplary mathematical operations used to calculate the ranking score of each converter.

<Equation 3>

$$B_{i-j} = \left(L_{i-j} \times W_3\right) + \left(T_{i-j} \times W_4\right)$$

<Equation 4>

$$B_{i-j} = \frac{1}{\left(W_3{}^{L_{i-j}} + W_4{}^{T_{i-j}}\right)}$$

In Equations 3 and 4, $B_{i-j}$ denotes the ranking score of the converter Pi-j, $L_{i-j}$ denotes the total path length of the converter Pi-j, $T_{i-j}$ denotes the mode duration of the converter Pi-j, $W_3$ denotes a predetermined third coefficient (which may be a positive number), and $W_4$ denotes a predetermined fourth coefficient (which may be a positive number).

According to Equation 3, as $T_{i-j}$ is larger and $L_{i-j}$ is longer, $B_{i-j}$ increases. Accordingly, when Equation 3 is used, higher priority rank may be assigned to larger ranking score.

According to Equation 4, as $T_{i-j}$ is larger and $L_{i-j}$ is longer, $B_{i-j}$ decreases. Accordingly, when Equation 4 is used, higher priority rank may be assigned to smaller ranking score.

In step S920, the controller 120 selects any one converter having the highest priority rank among the two or more converters in the power supply mode as the i-th control target that will be switched to the idle mode.

The i-th control target selected in the step S920 operates in the idle mode when the step S840 is performed. Accordingly, there are provided three technical effects as follows: the first technical effect of bringing the load factor of the i-th charging/discharging group Gi to within the reference load factor range or closer to the first reference load factor; the second technical effect of maximizing a reduction of line loss during power supply to the two or more chargers/dischargers in the battery charging mode of the i-th charging/discharging group Gi; and the third technical effect of suppressing an imbalance of the operation time in the power supply mode between the plurality of converters of the i-th charging/discharging group Gi.

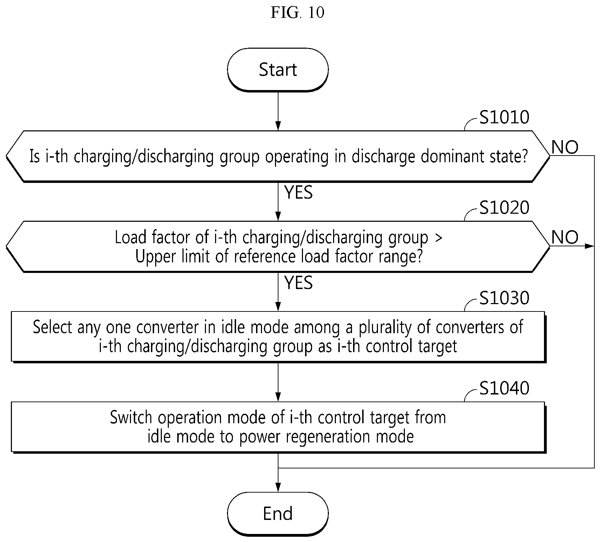

FIG. 10 is a flowchart schematically illustrating another example of subroutines that may be included in the step S520 of FIG. 5. The method of FIG. 10 may be individually performed on the first to m-th charging/-discharging groups G1~Gm.

Referring to FIG. 10, in step S1010, the controller 120 determines whether the i-th charging/discharging group Gi is operating in the discharge dominant state. When a value of the step S1010 is "YES", step S1020 may be performed.

In the step S1020, the controller 120 determines whether the load factor of the i-th charging/discharging group Gi is above the upper limit (the second reference load factor) of the reference load factor range. When a value of the step S1020 is "YES", step S1030 may be performed.

In the step S1030, the controller 120 selects any one converter in the idle mode among the plurality of converters Pi-1~P-n of the i-th charging/discharging group Gi as the i-th control target.

In step S1040, the controller 120 switches the operation mode of the i-th control target from the idle mode to the power regeneration mode.

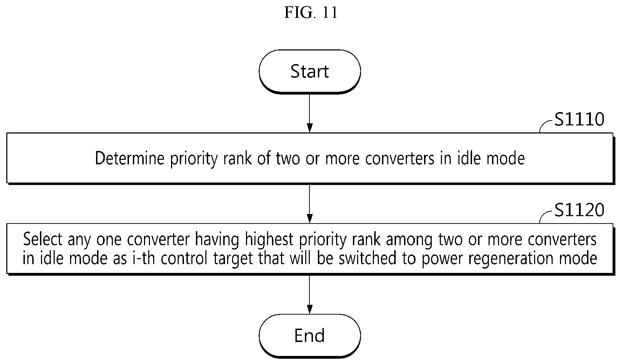

FIG. 11 is a flowchart schematically illustrating an example of subroutines that may be included in the step S1030 of FIG. 10. The method of FIG. 11 may be performed on the condition that at least one charger/-discharger of the plurality of chargers/dischargers Ci-1~Ci-n of the i-th charging/discharging group Gi is in the battery discharging mode, and two or more converters of the plurality of converters Pi-1~Pi-n of the i-th charging/discharging group Gi are in the idle mode.

Referring to FIG. 11, in step S1110, the controller 120 determines priority rank of the two or more converters in the idle mode. In the similar way to the above description made with reference to FIG. 7, the method according to FIG. 11 may include determining the priority rank of each converter based on at least one of the total path length or the mode duration of the converter.

The total path length of each converter in the idle mode may be related to the charger(s)/discharger(s) in the battery discharging mode within the i-th charging/-discharging group Gi. When it is assumed that the converter Pi-j is in the idle mode, the total path length of the converter Pi-j may be the sum of path lengths from the converter Pi-j to each charger/discharger in the battery discharging mode. The method for determining the total path length has already been described with reference to FIG. 7, and repeated description is omitted.

Of the two or more converters in the idle mode, higher priority rank may be set to one converter having the total path length that is shorter than the other.

Alternatively, of the two or more converters in the idle mode, higher priority rank may be set to one converter having the mode duration that is longer than the other.

Alternatively, of the two or more converters in the idle mode, higher priority rank may be set to one converter having smaller or larger ranking score than the other, wherein the ranking score is based on both the total path length and the mode duration. In this case, a mathematical operation that defines a predetermined positive or negative correspondence between the total path length and the ranking score and/or a predetermined positive or negative correspondence between the mode duration and the ranking score, such as Equation 1 or Equation 2, may be used.

In step S1120, the controller 120 selects any one converter having the highest priority rank among the two or more converters in the idle mode as the i-th control target that will be switched to the power regeneration mode.

The i-th control target selected in the step S1120 operates in the power regeneration mode when the step S1040 is performed. Accordingly, there are provided three technical effects as follows: the first technical effect of bringing the load factor of the i-th charging/discharging group Gi to within the reference load factor range or closer to the second reference load factor; the second technical effect of minimizing an increase in line loss during power regeneration from the two or more chargers/dischargers in the battery discharging mode of the i-th charging/discharging group Gi to the AC power network 1; and the third technical effect of suppressing an imbalance of the operation time in the idle mode between the plurality of converters of the i-th charging/discharging group Gi.

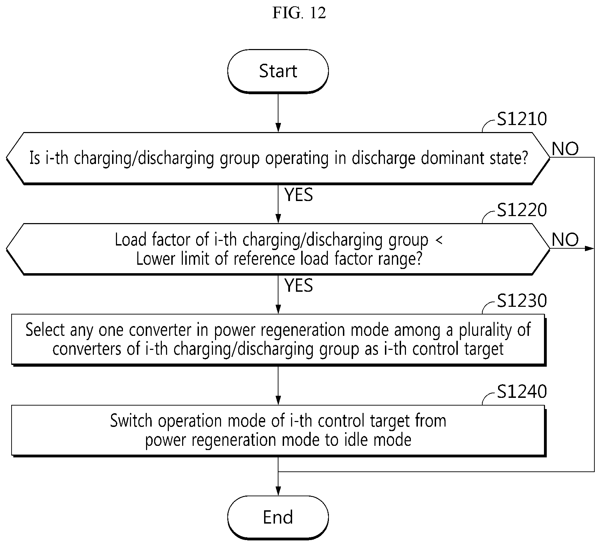

FIG. 12 is a flowchart schematically illustrating another example of subroutines that may be included in the step S520 of FIG. 5. The method of FIG. 12 may be individually performed on the first to m-th charging/-discharging groups G1~Gm.

Referring to FIG. 12, in step S1210, the controller 120 determines whether the i-th charging/discharging group Gi is operating in the discharge dominant state. When a value of the step S1210 is "YES", step S1220 may be performed.

In the step S1220, the controller 120 determines whether the load factor of the i-th charging/discharging group Gi is below the lower limit (the first reference load factor) of the reference load factor range. When a value of the step S1220 is "YES", step S1230 may be performed.

In the step S1230, the controller 120 selects any one converter in the power regeneration mode among the plurality of converters Pi-1~P-n of the i-th charging/-discharging group Gi as the i-th control target.

In step S1240, the controller 120 switches the operation mode of the i-th control target from the power regeneration mode to the idle mode.

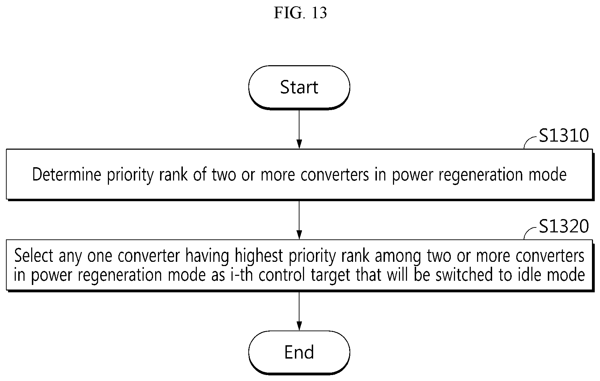

FIG. 13 is a flowchart schematically illustrating an example of subroutines that may be included in the step S1230 of FIG. 12. The method of FIG. 13 may be performed on the condition that at least one charger/-discharger of the plurality of chargers/dischargers Ci-1~Ci-n of the i-th charging/discharging group Gi is in the battery discharging mode, and two or more converters of the plurality of converters Pi-1~Pi-n of the i-th charging/discharging group Gi are in the power regeneration mode.

Referring to FIG. 13, in step S1310, the controller 120 determines priority rank of the two or more converters in the power regeneration mode. In the similar way to the above description made with reference to FIG. 9, the priority rank of each converter may be determined based on at least one of the total path length or the mode duration of the converter.

The total path length of each converter in the power regeneration mode may be related to the charger(s)/discharger(s) in the battery discharging mode within the i-th charging/discharging group Gi. When it is assumed that the converter Pi-j is in the power regeneration mode, the total path length of the converter Pi-j may be the sum of path lengths from the converter Pi-j to each charger/discharger in the battery discharging mode. The method for determining the total path length has already been described with reference to FIG. 7, and repeated description is omitted.

Of the two or more converters in the power regeneration mode, higher priority rank may be set to one converter having the total path length that is longer than the other.

Alternatively, of the two or more converters in the power regeneration mode, higher priority rank may be set to one converter having the mode duration that is longer than the other.

Alternatively, of the two or more converters in the power regeneration mode, higher priority rank may be set to one converter having smaller or larger ranking score than the other, wherein the ranking score is based on both the total path length and the mode duration. In this case, a mathematical operation that defines a predetermined positive or negative correspondence between the total path length and the ranking score and/or a predetermined positive or negative correspondence between the mode duration and the ranking score, such as Equation 3 or Equation 4, may be used.

In step S1320, the controller 120 selects any one converter having the highest priority rank among the two or more converters in the power regeneration mode as the i-th control target that will be switched to the idle mode.

The i-th control target selected in the step S1320 operates in the idle mode when the step S1240 is performed. Accordingly, there are provided three technical effects as follows: the first technical effect of bringing the load factor of the i-th charging/discharging group Gi to within the reference load factor range or closer to the first reference load factor; the second technical effect of maximizing a reduction of line loss during power regeneration from the two or more chargers/dischargers in the battery discharging mode of the i-th charging/discharging group Gi; and the third technical effect of suppressing an imbalance of the operation time in the power regeneration mode between the plurality of converters of the i-th charging/discharging group Gi.

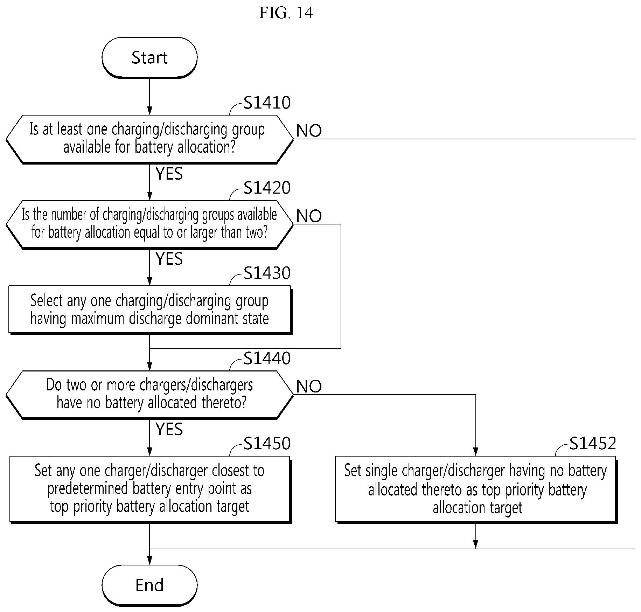

FIG. 14 is a flowchart schematically illustrating the system control method according to another embodiment of the present disclosure. The method according to FIG. 14 may be periodically or aperiodically performed by the system control apparatus 100 in a repeated manner while the charging/discharging process is performed by the battery charging/discharging system 10.

Referring to FIG. 14, in step S1410, the controller 120 determines whether at least one of the first to m-th charging/discharging groups G1~Gm is available for battery allocation. When a charging/discharging group is available for battery allocation, it represents that at least one charger/discharger of the charging/discharging group has no battery allocated thereto. When a value of the step S1410 is "YES", step S1420 may be performed. The value of the step S1410 being "NO" represents that the battery trays BT are put in all the chargers/dischargers C1-1~Cm-n of the first to m-th charging/discharging groups G1~Gm.

In the step S1420, the controller 120 determines whether the number of charging/discharging groups available for battery allocation is equal to or larger than two. When a value of the step S1420 is "YES", step S1430 may be performed. The value of the step S1420 being "NO" represents that only one of the first to m-th charging/discharging groups G1~Gm is available for battery allocation. When the value of the step S1420 is "NO", step S1440 may be performed.

In the step S1430, the controller 120 selects any one charging/discharging group having the maximum discharge dominant state among the two or more charging/discharging groups available for battery allocation.

In the step S1440, the controller 120 determines whether two or more chargers/dischargers of the single charging/discharging group determined to be available for battery allocation in the step S1420 or the charging/discharging group selected in the step S1430 have no battery allocated thereto. When a value of the step S1440 is "YES", step S1450 may be performed. When the value of the step S1440 is "NO", step S1452 may be performed.

In the step S1450, the controller 120 sets any one charger/discharger closest to the predetermined battery entry point BA among the two or more chargers/dischargers having no battery allocated thereto as a top priority battery allocation target.

In the step S1452, the controller 120 sets the single charger/discharger having no battery allocated thereto as a top priority battery allocation target.

The setting information of the top priority battery allocation target may be transmitted to the stacker crane SC. The stacker crane SC may provide the battery tray BT in standby state at the battery entry point BA to the charger/discharger set as the top priority battery allocation target according to the setting information.

When a first number of adjacent chargers/dischargers of the plurality of chargers/dischargers Ci-1~Ci-n of the i-th charging/discharging group Gi are in the battery charging mode, the controller 120 may prohibit the battery charging mode for each of the remaining chargers/dischargers of the i-th charging/discharging group Gi. The first number may be represented by Equation 5 below.

<Equation 5>

$$N_1 = \left[ \frac{I_{P\_i}}{I_{char\_max}} \right]$$

In Equation 5, $I_{P\_i}$ denotes the maximum allowable current of the DC power channel BPi, $I_{char\_max}$ denotes the maximum current supplied from the DC power channel BPi to the charger/discharger during the charging/discharging process of the charger/discharger, and $N_1$ denotes the first number. [] is the Gaussian brackets. For example, where $I_{P\_i} = 5000$ A and $I_{char\_max}$

= 1500 A, then $N_1 = 3$. Meanwhile, the top priority battery allocation target set in the method according to FIG. 14 may be a charger/discharger not prohibited from operating in the battery charging mode.

When a second number of adjacent chargers/dischargers of the plurality of chargers/dischargers Ci-1~Ci-n of the i-th charging/discharging group Gi are in the battery discharging mode, the controller 120 may prohibit the battery discharging mode for each of the remaining chargers/dischargers of the i-th charging/discharging group Gi. The second number may be represented by Equation 6 below.

<Equation 6>

$$N_2 = \left[\frac{I_{P\_i}}{I_{dchar\_max}}\right]$$

In Equation 6, $I_{dchar\_max}$ denotes the maximum current supplied from the charger/discharger to the DC power channel BPi during the charging/discharging process of the charger/discharger, and $N_2$ denotes the second number. For example, where $I_{P\_i} = 5000$ A and $I_{dchar\_max} = 2000$ A, then $N_2 = 2$. $I_{P\_i}$ in Equation 6 may be equal to $I_{P\_i}$ in Equation 5.

FIG. 15 is a diagram referenced in describing circuit layout and function of the main smoothing circuit and the sub smoothing circuit shown in FIG. 1.

Referring to FIG. 15, the charging/discharging facility Ei may further include at least one of the main smoothing circuit HAi-j or the sub smoothing circuit HBi-j.

The main smoothing circuit HAi-j is installed in an electrical area between the pair of DC power terminals of the converter Pi-j and two nodes NAi, NBi of the DC power channel BPi. The main smoothing circuit HAi-j includes a capacitor CMi-j, a resistor RMi-j and a switch SMi-j. The capacitor CMi-j may be connected between the pair of DC power terminals of the converter Pi-j. The resistor RMi-j may be connected between the DC power terminal (+) of the converter Pi-j and the node NAi. The switch SMi-j may be connected in parallel to the resistor RMi-j.

The controller 120 may control the switch SMi-j into OFF state while the converter Pi-j is in the idle mode.

When the converter Pi-j is switched from the idle mode to the power supply mode or power regeneration mode, the controller 120 may identify a voltage difference between voltage across the pair of DC power terminals of the converter Pi-j and voltage across the two nodes NAi, NBi and when the voltage difference is less than a predetermined threshold voltage, may control the switch SMi-j into ON state.

The sub smoothing circuit HBi-j is installed in an electrical area between the two nodes NAi, NBi of the DC power channel BPi and the pair of DC power terminals of the charger/discharger Ci-j. The sub smoothing circuit HBi-j includes a capacitor CSi-j, a resistor RSi-j and a switch SSi-j. The capacitor CSi-j may be connected between the pair of DC power terminals of the charger/discharger Ci-j. The resistor RSi-j may be connected between the DC power terminal (+) of the charger/discharger Ci-j and the node NAi. The switch SSi-j may be connected in parallel to the resistor RSi-j.

The controller 120 may control the switch SSi-j into OFF state while the charger/discharger Ci-j is in the idle mode (the charger/discharger Ci-j having no battery allocated thereto).

When the charger/discharger Ci-j is switched from the idle mode to the battery charging mode or battery discharging mode, the controller 120 may identify a voltage difference between voltage across the pair of DC power terminals of the charger/discharger Ci-j and voltage across the two nodes NAi, NBi and when the voltage difference is less than the threshold voltage, may control the switch SSi-j into ON state.

The embodiments of the present disclosure described hereinabove are not realized only through the apparatus and method, and may be implemented through programs that perform the functions corresponding to the exemplary configurations of the present disclosure or recording media having the programs recorded thereon, and such implementation may be easily achieved by those skilled in the art from the disclosure of the embodiments previously described.

Although the present disclosure has been hereinabove described with regard to certain embodiments and drawings, the present disclosure is not limited thereto and it is obvious to those skilled in the art that various modifications and changes may be made thereto within the technical aspects of the present disclosure and the scope of the appended claims and their equivalents.

Additionally, as many substitutions, modifications and changes may be made to the present disclosure as described above by those skilled in the art without departing from the technical aspects of the present disclosure, the present disclosure is not limited by the above-described embodiments and the accompanying drawings, and some or all of the embodiments may be selectively combined to allow various modifications.

**Claims**

1. A system control apparatus for a battery charging/discharging system including first to m-th charging/discharging groups, each charging/discharging group including a plurality of facility sets connected through a direct current (DC) power channel, each facility set including a converter and a charger/discharger, the system control apparatus comprising:

    a controller configured to monitor first to m-th group state information of the first to m-th charging/discharging groups,

wherein the controller is configured to:
control an operation mode of the converter of each of the plurality of facility sets included in each operating charging/discharging group of the first to m-th charging/discharging groups by comparing a load factor of each of the operating charging/discharging groups with a reference load factor range, based on the first to m-th group state information, wherein m is a natural number of 2 or greater.

2. The system control apparatus according to claim 1, wherein the controller is configured to:

when the load factor of an i-th charging/discharging group of the first to m-th charging/discharging groups is above an upper limit of the reference load factor range during operation of the i-th charging/discharging group in a charge dominant state,
switch any one converter of the i-th charging/discharging group from an idle mode to a power supply mode, wherein i is a natural number that is equal to or smaller than m.

3. The system control apparatus according to claim 2, wherein the controller is configured to:

when a load factor of the i-th charging/discharging group is above the upper limit of the reference load factor range during the operation of the i-th charging/discharging group in the charge dominant state,
determine priority rank of two or more converters in the idle mode among a plurality of chargers/dischargers of the i-th charging/discharging group, and switch any one converter having highest priority rank among the two or more converters in the idle mode to the power supply mode.

4. The system control apparatus according to claim 1, wherein the controller is configured to:

when a load factor of an i-th charging/discharging group of the first to m-th charging/discharging groups is below a lower limit of the reference load factor range during operation of the i-th charging/discharging group in a charge dominant state,
switch any one converter of the i-th charging/discharging group from a power supply mode to an idle mode, wherein i is a natural number that is equal to or smaller than m.

5. The system control apparatus according to claim 4, wherein the controller is configured to:

when the load factor of the i-th charging/discharging group is below the lower limit of the reference load factor range during the operation of the i-th charging/discharging group in the charge dominant state,
determine priority rank of two or more converters in the power supply mode among a plurality of chargers/dischargers of the i-th charging/discharging group, and switch any one converter having highest priority rank among the two or more converters in the power supply mode to the idle mode.

6. The system control apparatus according to claim 1, wherein the controller is configured to:

when a load factor of an i-th charging/discharging group of the first to m-th charging/discharging groups is above an upper limit of the reference load factor range during operation of the i-th charging/discharging group in a discharge dominant state,
switch any one converter of the i-th charging/discharging group from an idle mode to a power regeneration mode, wherein i is a natural number that is equal to or smaller than m.

7. The system control apparatus according to claim 6, wherein the controller is configured to:

when the load factor of the i-th charging/discharging group is above the upper limit of the reference load factor range during the operation of the i-th charging/discharging group in the discharge dominant state,
determine priority rank of two or more converters in the idle mode among a plurality of chargers/dischargers of the i-th charging/discharging group, and switch any one converter having highest priority rank among the two or more converters in the idle mode to the power regeneration mode.

8. The system control apparatus according to claim 1, wherein the controller is configured to:

when a load factor of an i-th charging/discharging group of the first to m-th charging/discharging groups is below a lower limit of the reference load factor range during operation of the i-th charging/discharging group in a discharge dominant state,
switch any one converter of the i-th charging/discharging group from a power regeneration mode to an idle mode, wherein i is a natural number that is equal to or smaller than m.

9. The system control apparatus according to claim 8,

wherein the controller is configured to:

when the load factor of the i-th charging/discharging group is below the lower limit of the reference load factor range during the operation of the i-th charging/discharging group in the discharge dominant state, determine priority rank of two or more converters in the power regeneration mode among a plurality of chargers/dischargers of the i-th charging/discharging group, and switch any one converter having highest priority rank among the two or more converters in the power regeneration mode to the idle mode.

10. The system control apparatus according to claim 1, wherein the controller is configured to:

when two or more charging/discharging groups of the first to m-th charging/discharging groups are available for battery allocation, select any one charging/discharging group having a maximum discharge dominant state among the two or more charging/discharging groups available for battery allocation, and set any one charger/discharger having no battery allocated thereto among a plurality of chargers/dischargers of the selected charging/discharging group as a top priority battery allocation target.

11. The system control apparatus according to claim 10, wherein the controller is configured to:

when at least two chargers/dischargers of the charging/discharging group having the maximum discharge dominant state have no battery allocated thereto, set any one charger/discharger closest to a predetermined battery entry point among the two or more chargers/dischargers having no battery allocated thereto as the top priority battery allocation target.

12. The system control apparatus according to claim 1, wherein the controller is configured to:

when a first number of adjacent chargers/dischargers of a plurality of chargers/dischargers of an i-th charging/discharging group of the first to m-th charging/discharging groups are in a battery charging mode, prohibit the battery charging mode for each of remaining chargers/dischargers of the i-th charging/discharging group, wherein the controller is configured to:

when a second number of adjacent chargers/dischargers of the plurality of chargers/dischargers of the i-th charging/discharging group are in a battery discharging mode, prohibit the battery discharging mode for each of remaining chargers/dischargers of the i-th charging/discharging group, and wherein i is a natural number that is equal to or smaller than m.

13. A system control method for a battery charging/discharging system including first to m-th charging/discharging groups, each charging/discharging group including a plurality of facility sets connected through a direct current (DC) power channel, each facility set including a converter and a charger/discharger, the system control method comprising:

monitoring first to m-th group state information of the first to m-th charging/discharging groups; and controlling an operation mode of the converter of each of the plurality of facility sets included in each operating charging/discharging group of the first to m-th charging/discharging groups by comparing a load factor of each of the operating charging/discharging groups with a reference load factor range, based on the first to m-th group state information, wherein m is a natural number of 2 or greater.

14. The system control method according to claim 13,

wherein the controlling of the operation mode of the converter of each of the plurality of facility sets included in each operating charging/discharging group comprises switching any one converter of an i-th charging/discharging group of the first to m-th charging/discharging groups from an idle mode to a power supply mode when the load factor of the i-th charging/discharging group is above an upper limit of the reference load factor range during operation of the i-th charging/discharging group in a charge dominant state, and wherein i is a natural number that is equal to or smaller than m.

15. The system control method according to claim 13,

wherein the controlling of the operation mode of the converter of each of the plurality of facility sets included in each operating charging/discharging group comprises switching any one converter of an i-th charging/discharging group of the first to m-th charging/discharging groups from a power supply mode to an idle mode when the load factor of the i-th charging/-

discharging group is below a lower limit of the reference load factor range during operation of the i-th charging/discharging group in a charge dominant state, and
wherein i is a natural number that is equal to or smaller than m.

FIG. 1

10

100

System control apparatus

110

Monitoring circuit

120

Controller

G1

Charging/discharging group

G2

Charging/discharging group

...

Gm

Charging/discharging group

FIG. 2

FIG. 3

FIG. 4

| G3 | G2 | | Gm |
|---|---|---|---|
| E1-n | E2-n | ⋯ | Em-n |
| ⋮ | ⋮ | ⋯ | |
| E1-3 | E2-3 | ⋯ | Em-3 |
| E1-2 | E2-2 | ⋯ | Em-2 |
| E1-1 | E2-1 | ⋯ | Em-1 |

SC

BA

BT

BB

BT

Y
X

FIG. 5

```
        ╭─────────────╮
        │    Start     │
        ╰─────────────╯
               │
               ▼                                    ⌐S510
┌───────────────────────────────────────────────────────┐
│        Monitor first to m-th group state information of │
│          first to m-th charging/discharging groups      │
└───────────────────────────────────────────────────────┘
               │
               ▼                                    ⌐S520
┌───────────────────────────────────────────────────────┐
│     Control operation mode of converter of each of a plurality of │
│ facility sets included in i-th charging/discharging group by comparing load factor of │
│      i-th charging/discharging group with reference load factor range │
└───────────────────────────────────────────────────────┘
               │
               ▼
        ╭─────────────╮
        │     End      │
        ╰─────────────╯
```

FIG. 6

```
                        ┌─────────────┐
                        │    Start    │
                        └─────────────┘
                               │
                               ▼                              ┌S610
      ╱─────────────────────────────────────────────────╲
     ╱   Is i-th charging/discharging group operating     ╲     NO
     ╲            in charge dominant state?               ╱ ──────────┐
      ╲─────────────────────────────────────────────────╱            │
                               │ YES                                  │
                               ▼                              ┌S620   │
      ╱─────────────────────────────────────────────────╲            │
     ╱     Load factor of i-th charging/discharging group >╲    NO    │
     ╲      Upper limit of reference load factor range?    ╱ ─────────┤
      ╲─────────────────────────────────────────────────╱            │
                               │ YES                                  │
                               ▼                              ┌S630   │
      ┌─────────────────────────────────────────────────┐            │
      │   Select any one converter in idle mode among a  │            │
      │   plurality of converters of i-th charging/       │           │
      │   discharging group as i-th control target        │           │
      └─────────────────────────────────────────────────┘            │
                               │                                      │
                               ▼                              ┌S640   │
      ┌─────────────────────────────────────────────────┐            │
      │   Switch operation mode of i-th control target   │            │
      │   from idle mode to power supply mode            │            │
      └─────────────────────────────────────────────────┘            │
                               │                                      │
                               ▼◄─────────────────────────────────────┘
                        ┌─────────────┐
                        │     End     │
                        └─────────────┘
```

FIG. 7

Start

S710

Determine priority rank of two or more converters in idle mode

S720

Select any one converter having highest priority rank among two or more converters in idle mode as i-th control target that will be switched to power supply mode

End

FIG. 8

```
                        ┌─────────────┐
                        │    Start    │
                        └──────┬──────┘
                               │                        ┌S810
                               ▼
      ╱────────────────────────────────────────────────╲   NO
     ⟨ Is i-th charging/discharging group operating in charge dominant state? ⟩─────┐
      ╲────────────────────────────────────────────────╱                           │
                               │ YES                                                │
                               ▼                        ┌S820                       │
      ╱────────────────────────────────────────────╲   NO                          │
     ⟨      Load factor of i-th charging/discharging group <    ⟩──────────────────┤
     ⟨           Lower limit of reference load factor range?    ⟩                   │
      ╲────────────────────────────────────────────╱                               │
                               │ YES                                                │
                               ▼                        ┌S830                       │
      ┌──────────────────────────────────────────────────────┐                     │
      │ Select any one converter in power supply mode among a │                     │
      │    plurality of converters of i-th charging/discharging│                    │
      │          group as i-th control target                 │                     │
      └──────────────────────────────────────────────────────┘                     │
                               │                        ┌S840                       │
                               ▼                                                    │
      ┌──────────────────────────────────────────────────────┐                     │
      │      Switch operation mode of i-th control target from│                     │
      │           power supply mode to idle mode              │                     │
      └──────────────────────────────────────────────────────┘                     │
                               │                                                    │
                               ▼◄───────────────────────────────────────────────────┘
                        ┌─────────────┐
                        │     End     │
                        └─────────────┘
```

FIG. 9

```
        ┌─────────────┐
        │    Start    │
        └─────────────┘
               │
               ▼                                          S910
┌──────────────────────────────────────────────────────────────┐
│ Determine priority rank of two or more converters in power     │
│ supply mode                                                    │
└──────────────────────────────────────────────────────────────┘
               │
               ▼                                          S920
┌──────────────────────────────────────────────────────────────┐
│ Select any one converter having highest priority rank among    │
│ two or more converters in power supply mode as i-th control    │
│ target that will be switched to idle mode                      │
└──────────────────────────────────────────────────────────────┘
               │
               ▼
        ┌─────────────┐
        │     End     │
        └─────────────┘
```

FIG. 10

Start

↓

S1010

Is i-th charging/discharging group operating in discharge dominant state? → NO

↓ YES

S1020

Load factor of i-th charging/discharging group >
Upper limit of reference load factor range? → NO

↓ YES

S1030

Select any one converter in idle mode among a plurality of converters of
i-th charging/discharging group as i-th control target

↓

S1040

Switch operation mode of i-th control target from
idle mode to power regeneration mode

↓

End

FIG. 11

```
                    ╭─────────────╮
                    │    Start    │
                    ╰─────────────╯
                           │
                           ▼                              ⌐S1110
┌──────────────────────────────────────────────────────────────────┐
│     Determine priority rank of two or more converters in idle mode │
└──────────────────────────────────────────────────────────────────┘
                           │
                           ▼                              ⌐S1120
┌──────────────────────────────────────────────────────────────────┐
│ Select any one converter having highest priority rank among two or │
│ more converters in idle mode as i-th control target that will be   │
│ switched to power regeneration mode                                │
└──────────────────────────────────────────────────────────────────┘
                           │
                           ▼
                    ╭─────────────╮
                    │     End     │
                    ╰─────────────╯
```

FIG. 12

```
                    ┌──────────┐
                    │  Start   │
                    └────┬─────┘
                         │
                         ▼                                    ⌐S1210
   ╱─────────────────────────────────────────────────────╲  NO
  ╱ Is i-th charging/discharging group operating in         ╲──────┐
  ╲ discharge dominant state?                               ╱      │
   ╲─────────────────────────────────────────────────────╱        │
                         │ YES                                     │
                         ▼                                    ⌐S1220│
   ╱─────────────────────────────────────────────────────╲  NO    │
  ╱ Load factor of i-th charging/discharging group <        ╲──────┤
  ╲ Lower limit of reference load factor range?             ╱      │
   ╲─────────────────────────────────────────────────────╱        │
                         │ YES                                     │
                         ▼                                    ⌐S1230│
  ┌───────────────────────────────────────────────────────┐       │
  │ Select any one converter in power regeneration mode    │       │
  │ among a plurality of converters of i-th                │       │
  │ charging/discharging group as i-th control target      │       │
  └───────────────────────┬───────────────────────────────┘       │
                          │                               ⌐S1240   │
                          ▼                                        │
  ┌───────────────────────────────────────────────────────┐       │
  │ Switch operation mode of i-th control target from      │       │
  │ power regeneration mode to idle mode                   │       │
  └───────────────────────┬───────────────────────────────┘       │
                          │                                        │
                          ▼◄───────────────────────────────────────┘
                    ┌──────────┐
                    │   End    │
                    └──────────┘
```

FIG. 13

Start

S1310

Determine priority rank of two or more converters in power regeneration mode

S1320

Select any one converter having highest priority rank among two or more converters in power regeneration mode as i-th control target that will be switched to idle mode

End

## FIG. 14

```
                      ┌─────────────┐
                      │    Start    │
                      └──────┬──────┘
                             │
                             ▼                    ╭─S1410
          ╱──────────────────────────────────╲
         ╱  Is at least one charging/discharging ╲   NO ──────────────────────────┐
         ╲  group available for battery allocation? ╱                              │
          ╲──────────────────────────────────╱                                    │
                             │ YES                                                 │
                             ▼                    ╭─S1420                          │
          ╱──────────────────────────────────╲                                    │
         ╱ Is the number of charging/discharging ╲  NO ──────────┐                 │
         ╲ groups available for battery allocation ╱             │                 │
         ╲ equal to or larger than two?           ╱              │                 │
          ╲──────────────────────────────────╱                  │                 │
                             │ YES                               │                 │
                             ▼                    ╭─S1430         │                 │
          ┌──────────────────────────────────┐                   │                 │
          │  Select any one charging/discharging│                 │                 │
          │  group having maximum discharge     │                 │                 │
          │  dominant state                     │                 │                 │
          └──────────────────┬───────────────┘                   │                 │
                             │                    ╭─S1440          │                 │
                             ▼◄──────────────────────────────────┘                 │
          ╱──────────────────────────────────╲                                    │
         ╱   Do two or more chargers/dischargers ╲  NO ──────────────┐             │
         ╲   have no battery allocated thereto?   ╱                   │             │
          ╲──────────────────────────────────╱                       │             │
                             │ YES                                    │             │
                             ▼          ╭─S1450            ╭─S1452     │             │
          ┌───────────────────────────────┐  ┌──────────────────────────┐          │
          │ Set any one charger/discharger │  │ Set single charger/       │         │
          │ closest to predetermined       │  │ discharger having no      │         │
          │ battery entry point as top     │  │ battery allocated thereto │         │
          │ priority battery allocation    │  │ as top priority battery   │         │
          │ target                         │  │ allocation target         │         │
          └───────────────┬───────────────┘  └───────────┬──────────────┘          │
                          │                               │                         │
                          └───────────────┬───────────────┴─────────────────────────┘
                                          ▼
                                   ┌─────────────┐
                                   │     End     │
                                   └─────────────┘
```

FIG. 15

EP 4 761 044 A1

## INTERNATIONAL SEARCH REPORT

| International application No. |
|---|
| **PCT/KR2025/003836** |

| A. | CLASSIFICATION OF SUBJECT MATTER |
|---|---|

**H02J 7/00**(2006.01)i

According to International Patent Classification (IPC) or to both national classification and IPC

| B. | FIELDS SEARCHED |
|---|---|

Minimum documentation searched (classification system followed by classification symbols)

H02J 7/00(2006.01); G01R 19/165(2006.01); H01M 10/44(2006.01); H02J 3/32(2006.01); H02J 7/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 충방전(charging and discharging), 상태(status), 부하율(load ratio), 기준(reference), 정격 전력(rated power)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2024-029896 A (TOYO SYSTEM CO., LTD.) 07 March 2024 (2024-03-07)<br>See paragraphs [0022]-[0139]; claims 1-5; and figures 1-10. | 1-15 |
| A | KR 10-2015-0071499 A (HRCNT) 26 June 2015 (2015-06-26)<br>See paragraphs [0023]-[0063]; claims 1-6; and figures 1-5. | 1-15 |
| A | KR 10-2022-0065600 A (LG ENERGY SOLUTION, LTD.) 20 May 2022 (2022-05-20)<br>See paragraphs [0036]-[0084]; claims 1-11; and figures 1-6. | 1-15 |
| A | KR 10-2022-0159094 A (SK ON CO., LTD.) 02 December 2022 (2022-12-02)<br>See paragraphs [0011]-[0062]; claims 1-10; and figures 1-7. | 1-15 |
| A | WO 2012-050004 A1 (SANYO ELECTRIC CO., LTD.) 19 April 2012 (2012-04-19)<br>See paragraphs [0009]-[0112]; claims 1-10; and figures 1-13. | 1-15 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 July 2025** | **11 July 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT<br>Information on patent family members | | | International application No.<br>**PCT/KR2025/003836** | | | |
|---|---|---|---|---|---|---|
| Patent document<br>cited in search report | | | Publication date<br>(day/month/year) | Patent family member(s) | | Publication date<br>(day/month/year) |
| JP | 2024-029896 | A | 07 March 2024 | CN 119563251 A | | 04 March 2025 |
| | | | | EP 4510298 A1 | | 19 February 2025 |
| | | | | JP 7406271 B1 | | 27 December 2023 |
| | | | | KR 10-2025-0006184 A | | 10 January 2025 |
| | | | | TW 202410525 A | | 01 March 2024 |
| | | | | TW I857649 B | | 01 October 2024 |
| | | | | WO 2024-042806 A1 | | 29 February 2024 |
| KR | 10-2015-0071499 | A | 26 June 2015 | KR 10-1591931 B1 | | 04 February 2016 |
| KR | 10-2022-0065600 | A | 20 May 2022 | CN 114946098 A | | 26 August 2022 |
| | | | | EP 4075627 A1 | | 19 October 2022 |
| | | | | EP 4075627 A4 | | 16 August 2023 |
| | | | | KR 10-2654899 B1 | | 03 April 2024 |
| | | | | US 12088103 B2 | | 10 September 2024 |
| | | | | US 2023-0055592 A1 | | 23 February 2023 |
| | | | | WO 2022-103183 A1 | | 19 May 2022 |
| KR | 10-2022-0159094 | A | 02 December 2022 | US 2022-0385097 A1 | | 01 December 2022 |
| WO | 2012-050004 | A1 | 19 April 2012 | EP 2629389 A1 | | 21 August 2013 |
| | | | | US 2013-0181526 A1 | | 18 July 2013 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240043627

- KR 1020250038055